# EUROPÄISCHE PATENTANMELDUNG

(11) **EP 2 468 791 A1**
(43) Veröffentlichungstag der Anmeldung: **27.06.2012**
(21) Anmeldenummer: 10196427.8
(22) Anmeldetag: 22.12.2010
(51) Int. Cl.: C08G 59/14, C08G 59/40, C08G 59/68, C09D 163/00, C08K 5/38

(54) **Verwendung von Thiocarbonaten in Epoxidharzformulierungen zur Oberflächenverbesserung**

(71) Anmelder: Sika Technology AG, 6340 Baar (CH)
(72) Erfinder: Bracht, Kathrin, 71636 Ludwigsburg (DE); Urban, Claus, 71636 Ludwigshafen (DE)
(74) Vertreter: Sika Patent Attorneys

(57) **Zusammenfassung**

Beschrieben wird die Verwendung von Thiocarbonatverbindungen in härtbaren Epoxidharzformulierungen.

## Beschreibung

Die vorliegende Erfindung betrifft die Verwendung von bestimmten Thiocarbonaten in härtbaren Epoxidharzformulierungen zur Oberflächenverbesserung.

Des Weiteren betrifft die vorliegende Erfindung entsprechend gehärtete Epoxidharzformulierungen sowie daraus hergestellte Produkte.

Bei der Verwendung von aminhärtenden Epoxidharzformulierungen stellt die Carbamatisierung eine unerwünschte Nebenreaktion dar. Die Carbamatisierung erfolgt bei Epoxidharzen durch die Reaktion von primären Aminen mit Kohlendioxid unter Mitwirkung von Luftfeuchtigkeit gemäß nachfolgender Reaktionsgleichung:

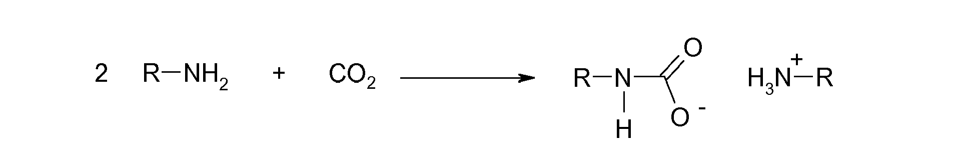

Das entsprechende Carbamat kann nicht mehr mit dem Epoxidharz reagieren, was zu Aushärtungs- und Filmstörungen führt. Diese äußern sich insbesondere durch unerwünschte Qualitätsschwankungen in den Oberflächen der Produkte, die ausgehend von den Epoxidharzformulierungen hergestellt werden.

Um diese Nebenreaktion der Carbamatisierung bei Epoxidharzen zu vermeiden, wird häufig Benzylalkohol eingesetzt. Der Einsatz von Benzylalkohol ist jedoch aus Gründen des Umwelt- und Gesundheitsschutzes nicht mehr erwünscht bzw. in Zukunft voraussichtlich auch nicht mehr zugelassen.

Daher besteht Bedarf nach einer alternativen Lösung zur Oberflächenverbesserung von gehärteten Epoxidharzformulierungen, insbesondere wenn die Epoxidharzformulierung bei Temperaturen von 15 °C oder weniger, insbesondere 10 °C oder weniger, speziell 5 °C oder weniger, gehärtet wird. Diese sollen insbesondere zu einer Vermeidung der Carbamatisierung von Epoxidharzen, insbesondere bei frühzeitiger Wasserbelastung des aushärtenden Epoxidharzes, führen.

Eine mögliche Lösung dieses Problems stellt die Verwendung von Aminen dar, die nicht zu einer unerwünschten Carbamatisierung neigen. Allerdings reagieren Amine, die nicht zu einer unerwünschten Carbamatisierung neigen, in der gewünschten Aushärtungsreaktion, vor allem bei Temperaturen von 15 °C oder weniger, sehr langsam (z. B. sekundäre Amine oder Amine der Produktreihe Jeffamine^{®}) oder ergeben spröde Oberflächen (z. B. Amine der Produktreihe Gaskamine^{®}), was zu langen Wartezeiten nach der Beschichtung oder zu einer verringerten Belastbarkeit führt.

Aus der JP 2005-255852 ist nun eine härtbare Epoxidharzformulierung bekannt, in welcher zur Vermeidung der Carbamatisierung eine Thiocarbonat- oder Carbonat-Verbindung verwendet wird. Als Aminhärter wird in der JP 2005-255852 zwingend eine Mannichbase verwendet, die als ein Formaldehydkondensat zwischen einem Phenol und einem aliphatischen Polyamin gebildet wird.

Ein Nachteil dieser Mannichbasen liegt in der Verwendung von Phenol als Ausgangsmaterial, da die erhaltenen Mannichbasen häufig noch nicht umgesetztes Phenol umfassen. Aufgrund der Toxizität von freiem Phenol sind auf Phenol basierende Mannichbasen für viele Anwendungsbereiche nicht einsetzbar. Ein weiterer Nachteil bei der Verwendung von herkömmlichen Mannichbasen gemäß JP 2005-255852 besteht darin, dass diese unter Verwendung von Formaldehyd hergestellt werden. Formaldehyd wird unter anderem für die Entstehung von Allergien, Haut-, Atemwegs- und Augenreizungen verantwortlich gemacht. Ein weiterer großer Nachteil von Mannichbasenhärtern ist die hohe Viskosität, die bei deren Herstellung aufgrund der Bildung von Oligomeren und Nebenprodukten entsteht. So bilden sich durch die Umsetzung von Phenolen mit Formaldehyd in einer herkömmlichen Mannichbasensynthese unter basischen Bedingungen hochmolekulare und verhältnismäßig hochviskose Resole aus.

Daher ist die Verwendung von Mannichbasenhärtern in entsprechenden Epoxidharzformulierungen prinzipiell nachteilig. Die Lösung, die die JP 2005-255852 für die Problemstellung der Hydrolyseempfindlichkeit von Epoxidharzformulierungen vorschlägt, nämlich die Verwendung von Thiocarbonaten in den Epoxidharzformulierungen, ist jedoch zwingend mit der gleichzeitigen Verwendung von Mannichbasenhärtern korreliert. Einen Hinweis in der JP 2005-255852 dahingehend, dass auch andere Härter in entsprechenden Epoxidharzformulierungen verwendet werden können, ist diesem Stand der Technik nicht zu entnehmen. Daher löst man das Problem der Carbamatisierung in der JP 2005-255852 auf Kosten von anderen Problemen, die sich mit der entsprechenden Problemlösung ergeben. Die vorliegende Erfindung stellt sich daher die Aufgabe, Epoxidharzformulierungen bereitzustellen, welche eine verbesserte Oberfläche auch bei Aushärtung bei tiefen Temperaturen von insbesondere 15 °C oder weniger und eine verbesserte Stabilität gegenüber Carbamatisierung, insbesondere bei Beaufschlagung mit Frühwasser, aufweisen und in welchen keine Mannichbasenhärter verwendet werden.

Gelöst wird diese Aufgabe völlig überraschend durch die Verwendung von
(1) mindestens einer Verbindung der allgemeinen Formel (I) 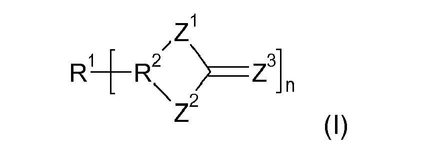 in welcher
   - Z¹, Z² und Z³, jeweils unabhängig voneinander, für Sauerstoff oder Schwefel mit der Maßgabe stehen, dass mindestens ein Rest von Z¹, Z² und Z³ für Schwefel steht;
   - R¹ für Wasserstoff, einen aliphatischen oder heteroaliphatischen Rest, einen araliphatischen oder heteroaliphatischen Rest, einen cycloaliphatischen oder heterocyclischen aliphatischen Rest, einen aromatischen oder heteroaromatischen Rest steht;
   - R² für einen gegebenenfalls substituierten Rest CₓH₂ₓ₋₁ mit x gleich 1 bis 5 steht; und
   - n für eine ganzzahlige Zahl von 1 bis 5 steht;
   in einer härtbaren Epoxidharzformulierung, umfassend
(2) mindestens ein Epoxidharz und
(3) mindestens einen Aminhärter,
zur Oberflächenverbesserung der gehärteten Epoxidharzformulierung.

Die erfindungsgemäße Verwendung ist dann dadurch gekennzeichnet, dass der Aminhärter keine Mannichbase umfasst, die erhalten wird durch ein Formaldehyd-Kondensat zwischen einem Phenol und einem aliphatischen Mono- oder Polyamin.

Insbesondere umfasst der Aminhärter keine Mannichbasen-Struktureinheit der folgenden allgemeinen Formel 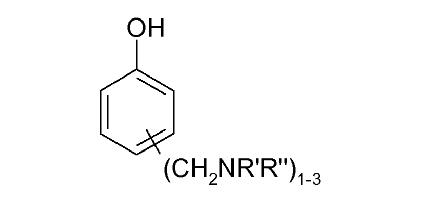 in welcher die Reste R' und R" für einen gegebenenfalls substituierten C₁-C₆-Alkylrest stehen und der Phenylring gegebenenfalls weitere Substituenten aufweisen kann.

Hierdurch ist gewährleistet, dass als Aminhärter keine Mannichbasen, wie sie von der JP 2005-255852 vorgeschlagen werden, verwendet werden. Vielmehr zeigt die vorliegende Erfindung auf, dass man das Problem der Oberflächenverbesserung in Epoxidharzformulierungen auch ohne die Verwendung von Mannichbasen lösen kann.

Insbesondere eignen sich die vorbeschriebenen Thiocarbonate zur Verbesserung der Stabilität der gehärteten Epoxidharzformulierung gegenüber einer Carbamatisierung, welche im Allgemeinen zu einer Weißverfärbung und zu Oberflächenschäden der gehärteten Epoxidharzformulierung führt.
Ferner lässt sich durch die erfindungsgemäße Additivierung die Frühwasserstabilität der gehärteten Epoxidharzformulierung verbessern.

Darüber hinaus wurde im Rahmen der vorliegenden Erfindung festgestellt, dass durch die Additivierung der härtbaren Epoxidharzformulierung durch die Verbindung der allgemeinen Formel (I), insbesondere bei tiefen Temperaturen, eine Beschleunigung der Aushärtung erreicht werden kann.

Im Nachfolgenden wird zunächst die Verbindung der allgemeinen Formel (I) näher erläutert.

### Verbindung der allgemeinen Formel (I) - Thiocarbonat

Bei der Verbindung der allgemeinen Formel (I) 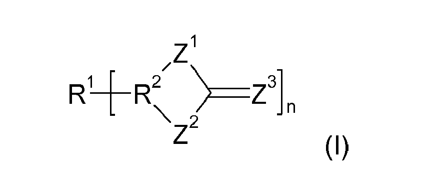 können die Reste Z¹ , Z² und Z³, jeweils unabhängig voneinander, für Sauerstoff oder Schwefel mit der Maßgabe stehen, dass zumindest ein Rest von Z¹, Z² und Z³ für Schwefel steht.

Die Verbindungen der allgemeinen Formel (I) können folgende Kombinationen der Reste Z¹, Z² und Z³ aufweisen:
Tabelle 1

| Verbindung | Z¹ | Z² | Z³ |
|---|---|---|---|
| (Ia) | O | O | S |
| (Ib) | O | S | S |
| (Ic) | O | S | O |

Im Fall von Z³ gleich Schwefel, kann es bei den Verbindungen der allgemeinen Formel (I) um 1,3-Dioxolan-2-thione (Verbindung der allgemeinen Formel (Ia)) und andererseits um 1,3-Oxathiolan-2-thione (Verbindung der allgemeinen Formel (Ib)) handeln. Wenn im Rahmen der vorliegenden Erfindung ein 1,3-Dioxolan-2-thion verwendet wird, so entsprechen die Reste Z¹ und Z² jeweils einem Sauerstoffatom. Wird im Rahmen der vorliegenden Erfindung ein 1,3-Oxathiolan-2-thion verwendet, so entspricht ein Rest von Z¹ oder Z² einem Sauerstoffatom und der andere Rest Z¹ oder Z² entspricht einem Schwefelatom. Im Fall von Z³ gleich Sauerstoff, kann es bei den Verbindungen der allgemeinen Formel (I) um 1,3-Oxathiolan-2-one (Verbindung der allgemeinen Formel (Ic)) handeln. Wenn im Rahmen der vorliegenden Erfindung ein 1,3-Oxathiolan-2-on verwendet, so entspricht ein Rest von Z¹ oder Z² einem Sauerstoffatom und der andere Rest Z¹ oder Z² entspricht einem Schwefelatom. Im Folgenden werden alle drei Verbindungsarten vereinfachend zusammen als Thiocarbonate bezeichnet.

Die Verbindung der allgemeinen Formel (I) weist eine oder mehrere Struktureinheiten der Art 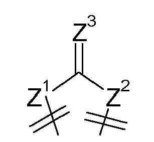 auf, wobei 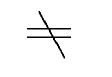 für Bindung der Reste Z¹ oder Z² an den Rest R² stehen.

In der vorstehenden Formel (I) steht R² für eine einen gegebenenfalls substituierten Rest CₓH₂ₓ₋₁ mit x gleich 1 bis 5. Besonders bevorzugt ist es, wenn x gleich 2 ist, so dass die Verbindung der allgemeinen Formel (I) einen heterocyclischen Fünfring umfasst.

Wenn der Rest R² substituiert ist, so können geeignete Substituenten ausgewählt werden aus der Gruppe, bestehend aus Hydroxy; Halogen; C₁-C₆-Alkoxy, C₁-C₆-Alkyl; und Halogen, insbesondere Chlor, Brom oder Iod.

Die Verbindungen der allgemeinen Formel (I) können beispielsweise die folgende allgemeine Struktur (II) aufweisen, 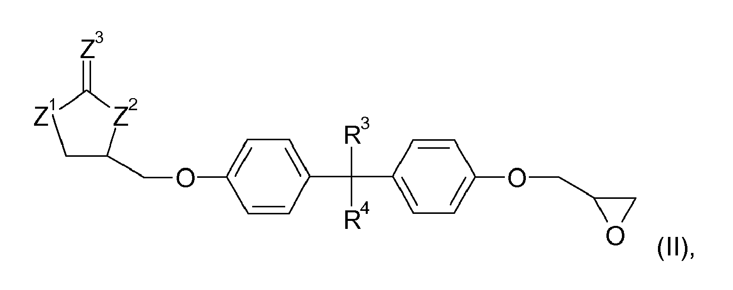 in welcher
- die Reste Z¹, Z² und Z³ die vorstehenden Bedeutungen aufweisen; und
- die Reste R³ und R⁴, jeweils unabhängig voneinander, für Wasserstoff, C₁-C₄-Alkyl, Trifluormethyl oder Aryl stehen.

Die Verbindungen der allgemeinen Formel (I) können beispielsweise auch die folgende allgemeine Struktur (III) aufweisen 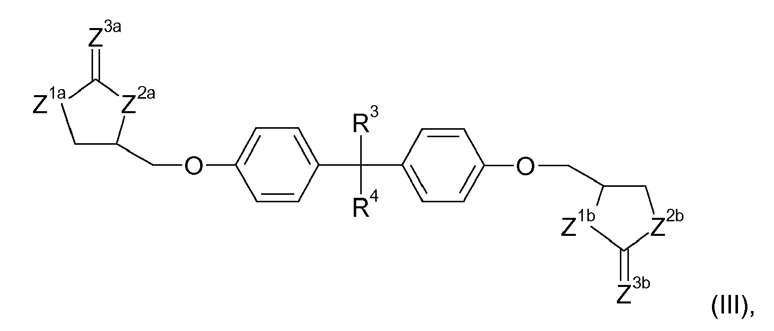 in welcher
- Z^{1a}, Z^{2a}, Z^{3a}, Z^{1b}, Z^{2b} und Z^{3b} jeweils unabhängig voneinander für Schwefel oder Sauerstoff mit der Maßgabe stehen, dass zumindest ein Rest von Z^{1a}, Z^{2a} und Z^{3a} für Schwefel und zumindest ein Rest von Z^{1b}, Z^{2b} und Z^{3b} für Schwefel steht; und
- R³ und R⁴, jeweils unabhängig voneinander, für Wasserstoff, C₁-C₄-Alkyl, Trifluormethyl oder Aryl stehen.

In der allgemeinen Formel (III) können die Reste Z^{1a}, Z^{2a} und Z^{3a} jeweils die folgende Bedeutung aufweisen:

**Tabelle 2**

| Verbindung | Z^{1a} | Z^{2a} | Z^{3a} |
|---|---|---|---|
| (III-a) | O | O | S |
| (III-b) | O | S | S |
| (III-c) | O | S | O |

In der allgemeinen Formel (III) können die Reste Z^{1b}, Z^{2b} und Z^{3b} jeweils die folgende Bedeutung aufweisen:

**Tabelle 3**

| Verbindung | Z^{1b} | Z^{2b} | Z^{3b} |
|---|---|---|---|
| (III-d) | O | O | S |
| (III-e) | O | S | S |
| (III-f) | O | S | O |

Im Rahmen der vorliegenden Erfindung wird unter einem C₁-C₄-Alkylrest vorzugsweise Methyl oder Ethyl, besonders bevorzugt Methyl, verstanden.

In der vorstehenden allgemeinen Formel (III) weisen die Reste R³ und R⁴ bevorzugt folgende Bedeutungen auf:

**Tabelle 4**

| Verbindung | R³ | R⁴ |
|---|---|---|
| (III-1) | CH₃ | CH₃ |
| (III-2) | CF₃ | CF₃ |
| (III-3) | CH₃ | C₆H₅ |
| (III-4) | CH₃ | CH₂CH₃ |
| (III-5) | C₆H₅ | C₆H₅ |
| (III-6) | H | H |

Von der vorliegenden Erfindung sind insbesondere Verbindungen der allgemeinen Formel (III) umfasst, in welchen die Bedeutungen für die Reste R³ und R⁴ der Verbindungen (III-1) bis (III-6) gemäß Tabelle 4 beliebig mit den Bedeutungen für die Reste Z^{1a}, Z^{2a}, Z^{3a}, Z^{1b}, Z^{2b} und Z^{3b} der Verbindungen (III-a) bis (III-f) gemäß Tabellen 2 und 3 kombiniert werden.

Besonders bevorzugt wird im Rahmen der vorliegenden Erfindung die folgende Verbindung der Formel (IV) basierend auf dem Bisphenol A-Diglycidylether (BisA-DTC) verwendet: 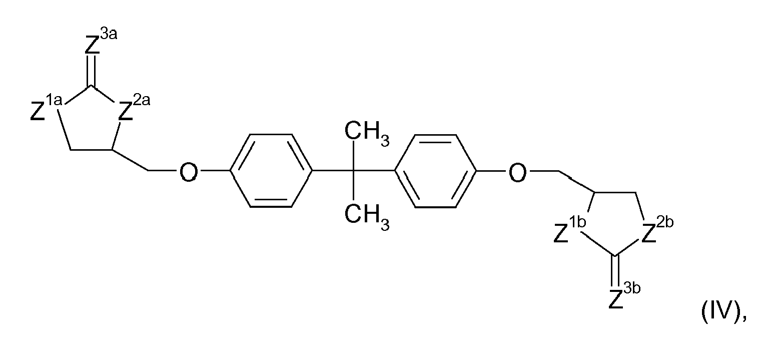 in welcher:
in welchen:
- Z^{1a}, Z^{2a}, Z^{3a}, Z^{1b}, Z^{2b} und Z^{3b}, jeweils unabhängig voneinander für Schwefel oder Sauerstoff mit der Maßgabe stehen, dass zumindest ein Rest von Z^{1a}, Z^{2a} und Z^{3a} für Schwefel und zumindest ein Rest von Z^{1b}, Z^{2b} und Z^{3b} für Schwefel steht.

Die Verbindungen der allgemeinen Formel (IV) können dabei die jeweiligen Bedeutungen für Z^{1a}, Z^{2a} und Z^{3a} gemäß Tabelle 2 und die jeweiligen Bedeutungen für Z^{1b}, Z^{2b} und Z^{3b} gemäß Tabelle 3 aufweisen.
Weitere geeignete Verbindungen der allgemeinen Formel (I) sind die folgenden Verbindungen der allgemeinen Formeln (Va), (Vb), (VIa) und (VIb): 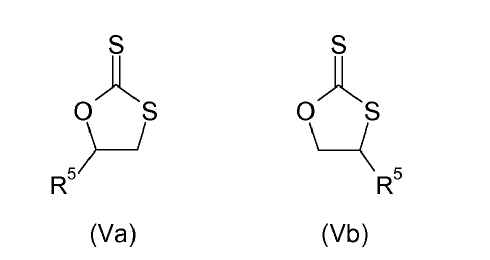 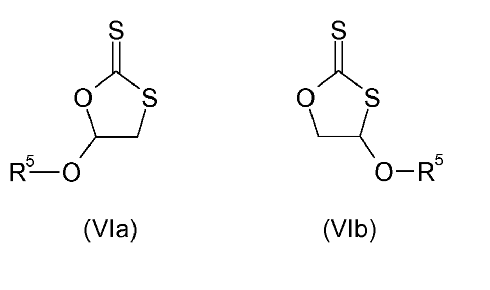 wobei in den allgemeinen Formeln (Va), (Vb), (VIa) und (VIb) der Rest R⁵ für einen linearen oder verzweigten Alkylrest, insbesondere für einen linearen oder verzweigten C₁-C₁₈-Alkylrest, oder einen Arylrest, insbesondere einem Phenylrest, steht.

Ein allgemeines Beispiel für eine entsprechende Verbindung der allgemeinen Formel (Va) bzw. (Vb) ist im Folgenden dargestellt:

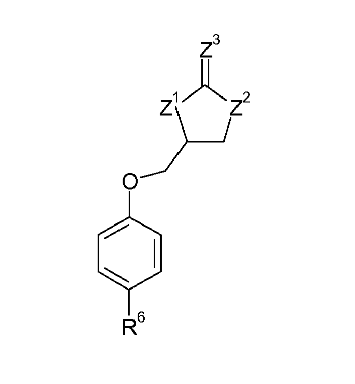

in welcher Z¹, Z² und Z³ eine der vorstehenden Bedeutungen aufweisen und der Rest R⁶ für einen C₁-C₆-Alkoxyrest oder einen C₁-C₆-Alkylrest, insbesondere tert-Butyl, steht.

Die erfindungsgemäß vorgesehenen Verbindungen der allgemeinen Formel (I) können nach bekannten Verfahren des Standes der Technik hergestellt werden. Entsprechende Verfahren sind beispielsweise in Organic Letters 2002, Vol. 4, No. 15, 2561 - 2563, Journal of Organic Chemistry, 1993, 58, 6198 und Journal of Organic Chemistry, 1995, 60, 473 beschrieben. Wie aus diesem Stand der Technik bekannt, werden die entsprechenden Thiocarbonate durch Umsetzung von Epoxidverbindungen mit Kohlendisulfid (CS₂) oder Kohlenoxidsulfid (COS) erhalten.

Die für die Herstellung der erfindungsgemäß zu verwendenden Thiocarbonate verwendete Epoxidverbindung wird insbesondere ausgewählt aus der Gruppe, bestehend aus Bisphenol A-diglycidylether (BADGE), Bisphenol F-diglycidylether (BFDGE), Polypropylenglykoldiglycidylether, Polytetrahydrofurandiglycidylether, linearen und verzweigten C₁-C₁₈-Alkylglycidylether (beispielsweise C₁₂/C₁₄-Alkylglycidylether, C₁₃/C₁₅-Alkylglycidylether, 2-Ethylhexylglycidylether), para-tert.-Butylphenolmonoglycidylether, o-Cresylglycidylether, Glycidylether des Cashewnusschalenöls, Diglycidylether von Dialkoholen wie beispielsweise 1,4-Butandiol, 1,6-Hexandiol, Neopentylglykol, Cyclohexandimethanol, Glycerintriglycidylether, Trimethylolpropanetriglycidylether, Polyglycerol-3-glycidylether, Polyoxypropylenglykoltriglycidylether, Rizinusöltriglycidylether, Pentaerythrityltetraglycidylether, Rizinusölpolyglycidylether, Glycidylester von C₁-C₁₈-Carbonsäuren, Addukten von Bisphenol A und Epichlorhydrin und Polyglycidylether von Phenol-Formaldehyd-Novolaken.

Insbesondere handelt es sich bei der Epoxidverbindung zur Herstellung der Verbindungen der allgemeinen Formel (I) um Bisphenol A-diglycidylether (BADGE).

### Epoxidharz

Im Folgenden werden weitere Bestandteile der erfindungsgemäßen Epoxidharz-Zusammensetzung beschrieben.

Die härtbare Epoxidharzformulierung umfasst mindestens ein härtbares Epoxidharz, in welchem Verbindungen der allgemeinen Formel (VII) verwendet werden 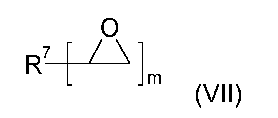 in welcher
- m: für eine ganzzahlige Zahl größer gleich 2, besonders bevorzugt für 2, steht; und
- R⁷: für einen m-wertigen organischen Rest steht, der m Epoxidgruppen der Verbindung der allgemeinen Formel (VII) miteinander verbindet.

Insbesondere kann es sich bei der Verbindung der allgemeinen Formel (VII) um Verbindungen der allgemeinen Formel (VIII) handeln 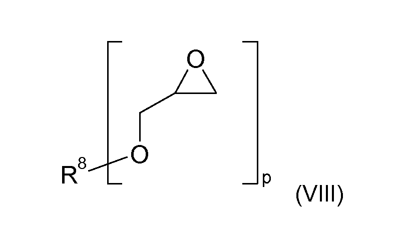 in welcher
- p: für eine ganzzahlige Zahl größer gleich 2, besonders bevorzugt für 2, steht; und
- R⁸: für einen m-wertigen organischen Rest steht, der p Epoxidgruppen der Verbindung der allgemeinen Formel (VIII) miteinander verbindet.

Bei den Resten R⁷ oder R⁸ kann es sich beispielsweise um mehrwertige lineare und verzweigte C₁-C₁₈-Alkylketten handeln, die in ihrer Alkylkette ein oder mehrere Sauerstoffatome umfassen.

Insbesondere kann es sich bei den Resten R⁷ und R⁸ um Butan-, Hexan-, Polyoxypropylenglykol-, Polyoxyethylenglykol-, Polytetrahydrofuran-, oder Polypropylenglykolketten handeln.

Bei den Resten R⁷ und R⁸ kann es sich ferner um Spacer auf Basis von Bisphenolen handeln, die im weiteren näher beschrieben werden.

Insbesondere ist es bevorzugt, wenn das Epoxidharz auf einer EpoxidVerbindung der allgemeinen Formel (IX) basiert 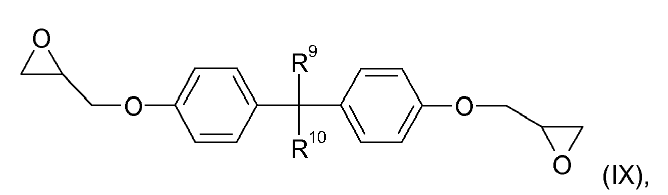 in welcher
- R⁹ und R¹⁰, jeweils unabhängig voneinander, für Wasserstoff, C₁-C₄-Alkyl, Trifluormethyl oder Aryl stehen.

In der vorstehenden allgemeinen Formel (IX) weisen die Reste bevorzugt folgende Bedeutungen auf:

| Verbindung | R⁹ | R¹⁰ |
|---|---|---|
| (VIII-a) | H | H |
| (VIII-b) | CH₃ | CH₃ |
| (VIII-c) | CF₃ | CF₃ |
| (VIII-d) | CH₃ | C₆H₅ |
| (VIII-e) | CH₃ | CH₂CH₃ |
| (VIII-f) | C₆H₅ | C₆H₅ |

Besonders bevorzugt basieren die im Rahmen der vorliegenden Erfindung verwendeten Epoxidharze auf den Glycidylethern von Bisphenol A und Bisphenol F. Auch Mischungen von entsprechenden Glycidylethern, beispielsweise von Bisphenol A-Diglycidylether und Bisphenol F-Diglycidylether, können im Rahmen der vorliegenden Erfindung verwendet werden.

### Aminhärter

Wie zuvor bereits offenbart umfasst die erfindungsgemäß zu verwendende Epoxidharzformulierung mindestens einen Aminhärter. Hierbei handelt es sich insbesondere nicht um Aminhärter auf Basis von Mannichbasen, die ausgehend von Formaldehyd, Phenol und einem Amin erhalten werden.

Besonders bevorzugt werden Aminverbindungen in der härtbaren Epoxidharzzusammensetzung der allgemeine Formel (X) verwendet:

NR¹¹R¹²R¹³ (X),

in welcher:
- R¹¹, R¹² und R¹³, jeweils unabhängig voneinander, für Wasserstoff, einen aliphatischen oder heteroaliphatischen Rest, einen araliphatischen oder heteroaliphatischen Rest, einen cycloaliphatischen oder heterocycloaliphatischen Rest, einen aromatischen oder heteroaromatischen Rest stehen, wobei die jeweiligen Reste substituiert sein können und mindestens ein Rest von R¹¹, R¹² und R¹³ für Wasserstoff steht.

Im Rahmen der vorliegenden Erfindung ist es insbesondere bevorzugt, wenn der Aminhärter in der härtbaren Epoxidharzformulierung ein Diamin oder Triamin (Polyamin) ist.

Entsprechende Polyamine können aus der folgenden Gruppe ausgewählt werden:
(1) aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan (H12-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 3-Aminomethyl-3,5,5-trimethylcyclohexan, 1-Amino-3-aminomethyl-3,5,5-trimethylcyclohexan (= Isophorondiamin oder IPDA), 2-und 4-Methyl-1,3-diaminocyclohexan und Mischungen davon, 1,3- und 1,4-Bis-(aminomethyl)-cyclohexan, 2,5(2,6 )-Bis-(aminomethyl)-bicyclo[2.2.1]heptan (NBDA), 3(4),8(9)-Bis-(aminomethyl)-tricyclo[5.2.1.0^{2,6}]decan, 1,4-Diamino-2,2,6-trimethylcyclohexan (TMCDA), 1,8-M enthandiamin, 3 , 9-Bis-(3-aminopropyl)-2,4,8,10-tetraoxaspiro[5.5]undecan sowie 1,3- und 1,4-Xylylendiamin;
(2) Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4 , 9-Dioxadodecan-1,12-diamin, 5,8-Dioxadodecan-3,10-diamin und höhere Oligomere dieser Diamine, Bis-(3-aminopropyl)poly-tetrahydrofurane und andere Polytetrahydrofurandiamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
(3) aliphatische, cycloaliphatische oder arylaliphatische Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
(4) Polyoxyalkylen-Triamine, welche typischerweise Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie zum Beispiel Jeffamine^{®} T-403, Jeffamine^{®} T-3000, Jeffamine^{®} T-5000; Polyetheramin T403, Polyetheramin T5000; und PC Amine^{®} TA 403, PC Amine^{®} TA 5000;
(5) sekundäre und primäre Aminogruppen aufweisende Polyamine, beispielsweise Diethylentriamin (DETA), Dipropylentriamin (DPTA), Bishexamethylentriamin (BHMT), 3-(2-Aminoethyl)aminopropylamin, N3-(3-Aminopentyl)-1,3-pentandiamin, N 5-(3-Aminopropyl)-2-methyl-1,5-pentandiamin, N5-(3-Amino-1-ethylpropyl)-2-methyl-1,5-pentandiamin;
(6) tertiäre Aminogruppen aufweisende Polyamine, wie beispielsweise N,N'-Bis-(aminopropyl)-piperazin, N,N-Bis-(3-aminopropyl)methylamin, N,N-Bis-(3-aminopropyl)ethylamin, N,N-Bis-(3-aminopropyl)propylamin N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)-dodecylamin und N,N-Bis-(3-aminopropyl)-talgalkylamin, erhältlich als Triameen^{®} Y12D und Triameen^{®} YT (von Akzo Nobel);
(7) sekundäre Aminogruppen aufweisende Polyamine, wie beispielsweise N,N'-Dibutylethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylendipiperidin, N-alkylierte Polyetheramine, beispielsweise die Jeffamine^{®}-Typen SD-231, SD-401, SD-404 und SD-2001 (von Huntsman); weiterhin sogenannte Polyamidoamine. Als Polyamidoamin wird das Reaktionsprodukt aus einer ein- oder mehrwertigen Carbonsäure, beziehungsweise deren Ester oder Anhydride, und einem aliphatischen, cycloaliphatischen oder aromatischen Polyamin bezeichnet, wobei das Polyamin im stöchiometrischen Überschuss eingesetzt wird. Als mehrwertige Carbonsäure wird üblicherweise eine sogenannte Dimerfettsäure verwendet, und als Polyamin wird üblicherweise ein Polyalkylenamin wie beispielsweise TETA verwendet. Kommerziell erhältliche Polyamidoamine sind beispielsweise Versamid^{®} 100, 125, 140 und 150 (von Cognis), Aradur 223, 250 und 848 (von Huntsman), Euretek^{®} 3607, Euretek 530^{®} (von Huntsman), Beckopox^{®} EH 651, EH 654, EH 655, EH 661 und EH 663 (von Cytec); und
(8) Umsetzungsprodukte, welche erhalten werden durch Umsetzung der unter (1) bis (7) genannten Amine mit einem Unterschuss Epoxyverbindung (Epoxy-Amin-Addukte).

Bevorzugt wird der Aminhärter ausgewählt aus der Gruppe, bestehend aus 1,5-Diamino-2-methylpentan (MPMD), 2-Butyl-2-ethyl-1,5-pentandiamin (C11-Neodiamin), 2,2,4- und 2,4,4-Trimethylhexamethylendiamin (TMD), Bis-(4-amino-3-methylcyclohexyl)-methan, 3-Aminomethyl-3,5,5-trimethylcyclohexan, 1-Amino-3-aminomethyl-3,5,5-trimethylcyclohexan (= Isophorondiamin oder IPDA), 1,3-Bis-(aminomethyl)cyclohexan, 3(4),8(9)-Bis-(aminomethyl)-tricyclo[5.2.1.0^{2,6}]decan, 1,3-Xylylendiamin, Diethylentriamin (DETA), Dipropylentriamin (DPTA) und ein Ethergruppen-haltiges Diamin aus der Aminierung eines Polyoxyalkylen-Diols mit einem Molekulargewicht von 500 bis 5000 g/mol, insbesondere Jeffamine^{®} D-230 und Jeffamine^{®} D-400.

Weitere bevorzugte Aminhärter sind
- primäre, sekundäre und tertiäre Aminogruppen aufweisende Polyamine, beispielsweise Gaskamine^{®} A 229, Gaskamine^{®} 240, Gaskamine^{®} 328 (von Mitsubishi Gas Chemical); und
- auf Cashewnussschalenöl (cashew nut shell liquid) basierende Amine, beispielsweise aus der Phenalkamine Curing Agent Serie der Cardolite Corporation.

Weitere übliche Bestandteile der Epoxidharzformulierung können sein:
- Pigmente, Pigmentpasten und/oder Füllstoffe (z.B. aus der Gruppe von Schwerspat (BaSO₄), Calciumcarbonat, Dolomit, Calciumsulfat, Talkum, Kaolin, Glimmer, Feldspat, Wollastonit, Aluminiumsilikat, Zirkonsilikat, Siliziumdioxid in Form von Sand, Quarz, Quarzmehl, Quarzit, Perlit, Glaskugeln; Aluminiumhydroxid, Ruße, Graphitpulver, synthetische Fasern), Antioxidantien, Verlaufs- bzw. Verdickungsmittel, Entschäumer/Entlüfter und/oder Netzmittel, Reaktivverdünner, Lösungsmittel, Konservierungsmittel und Weichmacher.

Durch die Additivierung der Epoxidharzformulierung mit der Verbindung der allgemeinen Formel (I) kann auf den Zusatz von Benzylalkohol zu der härtbaren Epoxidformulierung verzichtet werden. Daher ist es insbesondere bevorzugt, wenn die Epoxidharzformulierung keinen Benzylalkohol aufweist, da der Einsatz von Benzylalkohol aus Gründen des Umwelt- und Gesundheitsschutzes nicht mehr erwünscht ist bzw. in Zukunft gegebenenfalls nicht mehr zugelassen sein wird.

Die erfindungsgemäße Verwendung ist insbesondere dann bevorzugt, wenn eine Epoxidharzformulierung gegenüber einer möglichen Carbamatisierung geschützt werden soll, welche ausgelöst wird durch die Belastung der bei tiefen Temperaturen aushärtenden Epoxidharzformulierung mit Frühwasser oder hoher Luftfeuchtigkeit, insbesondere einer relativen Luftfeuchtigkeit von größer 60 %. Im Rahmen der vorliegenden Erfindung wird unter einer bei tiefen Temperaturen aushärtenden Epoxidharzformulierung eine Formulierung verstanden, die bei einer Temperatur von 15 °C oder weniger ausgehärtet wird.

Die vorliegende Erfindung betrifft daher auch die Verwendung der zuvor beschriebenen Verbindungen der allgemeinen Formel (1), in welcher die Stabilität der Epoxidharzformulierung gegenüber Carbamatisierung bei Belastung der Zusammensetzung mit Frühwasser oder hoher Luftfeuchtigkeit, insbesondere einer relativen Luftfeuchtigkeit von größer 60 %, insbesondere bei tiefen Temperaturen von 15 °C oder weniger verbessert wird.

Die Frühwasserbeständigkeit im Rahmen der vorliegenden Erfindung beschreibt dabei die Beständigkeit einer Epoxidharzformulierung in nicht vollständig durchgehärtetem Zustand (im Zeitraum 0 bis 14 Tagen nach Applikation bei < 15 °C und > 60 % relativer Luftfeuchtigkeit) gegenüber Wasser. Zur Prüfung der Frühwasserbeständigkeit hat sich im Rahmen der vorliegenden Erfindung ein Zeitraum 0 bis 7 Tagen nach Applikation bei 8 °C und 80 % relativer Luftfeuchtigkeit als geeignet erwiesen.

Weiterer Gegenstand der vorliegenden Erfindung sind gehärtete Epoxidharzformulierungen, die unter Additivierung mit Verbindungen der allgemeinen Formel (I) erhalten werden und sich durch eine verbesserte Stabilität gegenüber Carbamatisierung, insbesondere bei Frühwasserbelastung und Aushärtung bei Temperaturen von 15 °C oder weniger, auszeichnen.

Auch die unter Verwendung der erfindungsgemäß vorgesehenen Thiocarbonate hergestellten Beschichtungen, Klebstoffe, Dichtstoffe, Laminier-, Tränk- und Gießharze, Verguss- und Spachtelmassen, Verbundwerkstoffe, Faserverbundstoffe und Modellwerkstoffe zeichnen sich durch eine hohe Frühwasserbeständigkeit besonders bei tiefen Temperaturen von 15 °C oder weniger aus und sind ebenfalls Gegenstand der vorliegenden Erfindung. Unter Beschichtungen sind hierbei vor allem aber nicht nur Bodenbeschichtungen für Wohnbereiche, Aufenthaltsräume, öffentliche Gebäude, wie beispielsweise Schulen, Kindergärten, Behörden, Krankenhäuser; Industriebauten, Fabrik- und Lagerhallen, Geh- und Verbindungswege, Industrieanlagen, Werkstätten, Reinräume, Parkhäuser, -garagen und -decks und Brücken zu verstehen. Weiterhin sind darunter Beschichtungen für Tankanlagen, Auffangwannen, Kühltürme, Rohre, zur Abdichtung von Dächern, Kellern, Behältern beispielsweise für Trinkwasser, Schwimmbäder, Kläranlagen zu verstehen, sowie Beschichtungen zum Korrosions-, Flamm- und Säureschutz metallischer und anderer Oberflächen und Untergründe.

Zusätzlich zu dem erfindungsgemäßen Effekt der Oberflächenverbesserung, insbesondere gegenüber Einwirkung von Frühwasser, wird durch die vorliegende Erfindung auch eine Beschleunigung der Aushärtung der Epoxidharzformulierung erreicht.

Die vorliegende Erfindung betrifft daher auch die Verwendung einer zuvor beschriebenen Verbindung der allgemeinen Formel (I), wobei zusätzlich zu der Oberflächenverbesserung auch eine Beschleunigung der Aushärtung der Epoxidharzformulierung erfolgt. Dabei ist es insbesondere bevorzugt, wenn diese Beschleunigung der Aushärtung bei einer Temperatur unterhalb von 20 °C, bevorzugt unterhalb von 15 °C, besonders bevorzugt unterhalb von 10 °C, auftritt.

Der Gehalt an Verbindung der allgemeinen Formel (I) in der härtbaren Epoxidharzformulierung, jeweils bezogen auf das Epoxidharz, beträgt vorzugsweise 1 bis 50 Gew.-%, bevorzugt 2 bis 30 Gew.-%, besonders bevorzugt 2,5 bis 25 Gew.-%.

Die vorliegende Erfindung führt zu einer Vielzahl an Vorteilen:

Da die vorliegende Erfindung keine Mannichbase als Härterkomponente für das Epoxidharz erfordert, ist das resultierende Epoxidharz frei von Phenol, was aufgrund der Toxizität von freiem Phenol von Vorteil ist. Auch auf die Verwendung von Formaldehyd kann im Rahmen der vorliegenden Erfindung verzichtet werden.

Auch kann auf die Verwendung von Benzylalkohol zur Verhinderung der Carbamatisierung der Aminhärterkomponente verzichtet werden.

Da im Rahmen der vorliegenden Erfindung auf Formaldehyd-haltige und Phenolhaltige Mannichbasen sowie auf Benzylalkohol verzichtet wird, besteht kein Problem hinsichtlich der Exposition mit diesen Verbindungen. Somit können VOC-freie (VOC = Volatile Organic Compounds) Epoxidharzformulierungen hergestellt werden, die insbesondere auch in geschlossenen Räumen Anwendung finden können.

Aus den unter Verwendung von Thiocarbonaten hergestellten Epoxidharzformulierungen lassen sich lösemittelarme oder lösemittelfreie Beschichtungen, Klebstoffe, Dichtstoffe, Laminier-, Tränk- und Gießharze, Verguss- und Spachtelmassen, Verbundwerkstoffe, Faserverbundstoffe und Modellwerkstoffe herstellen.

Weiterer Gegenstand der vorliegenden Erfindung ist ein Verfahren zur Herstellung von gehärteten Epoxidharzformulierungen mit einer verbesserten Oberfläche besonders bei Aushärtung bei tiefen Temperaturen von 15 °C oder weniger durch Härten einer Epoxidverbindung mit mindestens einem Aminhärter, wobei die Härtung in Gegenwart von mindestens einer Verbindung der allgemeinen Formel (I) durchgeführt wird 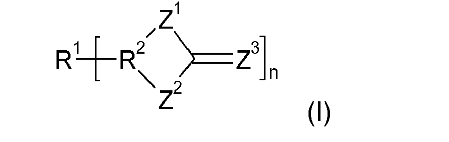 in welcher
- Z¹, Z² und Z³, jeweils unabhängig voneinander, für Sauerstoff oder Schwefel stehen;
- R¹ für Wasserstoff, einen aliphatischen oder heteroaliphatischen Rest, einen araliphatischen oder heteroaliphatischen Rest, einen cycloaliphatischen oder heterocyclischen aliphatischen Rest, einen aromatischen oder heteroaromatischen Rest steht;
- R² für einen gegebenenfalls substituierten Rest CₓH₂ₓ₋₁ mit X gleich 1 bis 5 steht; und
- n für eine ganzzahlige Zahl von 1 bis 5 steht;
und
in welcher der Aminhärter keine Mannichbase umfasst, die erhalten wird durch ein Formaldehyd-Kondensat zwischen einem Phenol und einem aliphatischen Mono- oder Polyamin.

Insbesondere umfasst der Aminhärter keine Mannichbasen-Struktureinheit der folgenden allgemeinen Formel 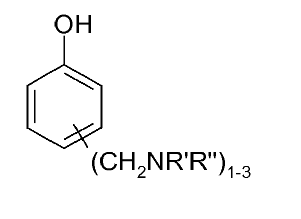 in welcher die Reste R' und R" für einen gegebenenfalls substituierten C₁-C₆-Alkylrest stehen und der Phenylring gegebenenfalls weitere Substituenten aufweisen kann.

Im Rahmen dieses Verfahrens wird im Allgemeinen eine Kombination von zu härtendem Epoxidharz mit der Verbindung der allgemeinen Formel (I) bereitgestellt und dann mit einem entsprechenden Aminhärter umgesetzt.

In diesem Verfahren werden die zuvor beschriebenen Bestandteile einer Verbindung der allgemeinen Formel (I), eines Epoxidharzes und eines Aminhärters verwendet. Insoweit wird auf die obigen Ausführungen verwiesen.

Dieses erfindungsgemäße Verfahren dient zur Herstellung von Beschichtungen, Klebstoffen, Dichtstoffen, Laminier-, Tränk- und Gießharze, Verguss- und Spachtelmassen, Verbundwerkstoffe, Faserverbundstoffe und Modellwerkstoffe, die somit ebenfalls Gegenstand der vorliegenden Erfindung sind.

Die vorliegende Erfindung wird anhand der nachfolgenden Beispiele näher erläutert.

### Herstellungsbeispiele

### 1. Herstellung einer 1,3-Oxathiolan-2-thion-Verbindung ausgehend von Epoxidharz in Diisopropylnaphthalin

400 g Diisopropylnaphthalin und 0,5 g LiBr werden vorgelegt und unter gutem Rühren mit 155 g CS₂ versetzt. 400 g Epoxidharz A werden zügig zugegeben und bei Raumtemperatur über Nacht gerührt. Weitere 400 g Epoxidharz A werden zur Reaktionsmischung gegeben und 6 bis 8 h auf 50 °C Innentemperatur erhitzt.

### 2. Herstellung einer Zusammensetzung, umfassend ein härtbares Epoxidharz - Komponente A -

### Komponente A1 (Vergleich):

Eine Komponente A1 wurde aus 29,95 g Epoxidharz A, 8,56 g Epoxidharz F, 0,26 g Bentone SD 2, 19,34 g Quarzmehl Dorsilit 10000 Mipur, 19,34 g Sikron M 500, 4,28 g Epoxide No 8, 0,86 g Byk A-525, 2,995 g Bayferrox 130 BM und 14,44 g Ruetasolv DI hergestellt.

### Komponente A2 (erfindungsgemäß):

Eine Komponente A2 wurde aus 27,01 g Epoxidharz A, 8,13 g Epoxidharz F, 0,26 g Bentone SD 2, 19,34 g Quarzmehl Dorsilit 10000 Mipur, 19,34 g Sikron M 500, 4,28 g Epoxide No 8, 0,86 g Byk A-525, 2,995 g Bayferrox 130 BM, 13,00 g Ruetasolv DI und 4,81 g der oben beschriebenen 1,3-Oxathiolanthion-Mischung hergestellt.

### Komponente A3 (erfindungsgemäß):

Eine Komponente A3 wurde aus 24,06 g Epoxidharz A, 7,70 g Epoxidharz F, 0,26 g Bentone SD 2, 19,34 g Quarzmehl Dorsilit 10000 Mipur, 19,34 g Sikron M 500, 4,28 g Epoxide No 8, 0,86 g Byk A-525, 2,995 g Bayferrox 130 BM, 11,55 g Ruetasolv DI und 9,63 g der oben beschriebenen 1,3-Oxathiolanthion-Mischung hergestellt.

### Komponente A4 (erfindungsgemäß):

Eine Komponente A4 wurde aus 19,86 g Epoxidharz A, 5,98 g Epoxidharz F, 0,26 g Bentone SD 2, 19,34 g Quarzmehl Dorsilit 10000 Mipur, 19,34 g Sikron M 500, 4,28 g Epoxide No 8, 0,86 g Byk A-525, 2,995 g Bayferrox 130 BM, 9,56 g Ruetasolv DI und 30 g der oben beschriebenen 1,3-Oxathiolanthion-Mischung hergestellt.

### Komponente A5 (erfindungsgemäß):

Eine Komponente A5 wurde aus 0,54 g Epoxidharz A, 4,28 g Epoxidharz F, 0,26 g Bentone SD 2, 19,34 g Quarzmehl Dorsilit 10000 Mipur, 19,34 g Sikron M 500, 4,28 g Epoxide No 8, 0,86 g Byk A-525, 2,995 g Bayferrox 130 BM, 14,44 g Ruetasolv DI und 48,13 g der oben beschriebenen 1,3-Oxathiolanthion-Mischung hergestellt.

### 3. Herstellung einer Aminhärter-Zusammensetzung

### - Komponente B -

### Komponente B1:

Eine Komponente B1 wurde aus 20 g Vestamin IPD, 20 g m-Xylendiamin, 40 g Novares LS 500 und 20 g Ruetasolv DI hergestellt.

### Komponente B2:

Eine Komponente B2 wurde aus 50 g Vestamin IPD und 50 g m-Xylendiamin hergestellt.

### Anwendungsbeispiele

Alle Proben wurden bei 8 °C und 80 % relativer Luftfeuchtigkeit gehärtet. In den einzelnen Anwendungsbeispielen wurde das stöchiometrische Verhältnis der funktionellen Epoxidgruppen und gegebenenfalls Thiocarbonatgruppen (aus Epoxidharz und gegebenenfalls erfindungsgemäßer Additivierung durch die 1,3-Oxathiolanthion-Verbindung) sowie Aminhärter konstant gehalten.

### Beispiel 1 (Vergleich):

Komponenten A1 und B1 wurden im Verhältnis 82:18 bezüglich des Gewichts gemischt.

### Beispiel 2 (erfindungsgemäß):

Komponenten A3 und B1 wurden im Verhältnis 83:17 bezüglich des Gewichts gemischt.

### Beispiel 3 (erfindungsgemäß):

Komponenten A4 und B1 wurden im Verhältnis 81:19 bezüglich des Gewichts gemischt.

### Beispiel 4 (Vergleich):

Komponenten A1 und B2 wurden im Verhältnis 92:8 bezüglich des Gewichts gemischt.

### Beispiel 5 (erfindungsgemäß):

Komponenten A3 und B2 wurden im Verhältnis 93:7 bezüglich des Gewichts gemischt.

### Beispiel 6 (erfindungsgemäß):

Komponenten A4 und B2 wurden im Verhältnis 93:7 bezüglich des Gewichts gemischt.

### Beispiel 7 (erfindungsgemäß):

Komponenten A5 und B2 wurden im Verhältnis 93:7 bezüglich des Gewichts gemischt.

Zur Ermittlung der Frühwasserbeständigkeit wurden Aluminiumplatten (115 cm²) mit 1,75 kg/m² der jeweiligen Formulierungen der Komponenten A und B beschichtet (Schichtdicke ca. 2 mm). Die Komponente B wurde dazu zur Komponente A gegeben und bis zum Vorliegen einer homogenen Mischung gerührt. Die resultierende Mischung wurde mit einem Spachtel gleichmäßig auf der Aluminiumplatte verteilt.

Die Oberflächen der bei 8 °C und 80% rel. Luftfeuchte aushärtenden Systeme aus den Beispielen 1 bis 7 werden nach 24 h, 48 h, 72 h und 168 h jeweils für 24 h mit einem feuchten Schwamm belegt und dieser mit einem Becher abgedeckt. Die Oberflächen wurden im Anschluss hinsichtlich ihres Glanzes und des Weißanlaufens nach Skala 1 an drei Stellen (Auflagefläche Schwamm, unbelegte Fläche, Fläche unter Becher neben Schwamm) beurteilt.

| t | Beispiel 1 | Beispiel 2 | Beispiel 3 | Beispiel 4 | Beispiel 5 | Beispiel 6 | Beispiel7 |
|---|---|---|---|---|---|---|---|
| 24 h | 4/1/2 | 3/1/0 | 0/0/0 | ***/2/4 | 4/0/1 | 2/0/1 | 0/0/0 |
| 48 h | 2/1/2 | 3/1/0 | 0/0/0 | 4**/1/2 | 3/0/1 | 2/0/1 | 0/0/0 |
| 72 h | 1/1/1 | 1/1/0 | 0/0/0 | 4**/1/2 | 3/0/1 | 2/0/0 | 0/0/0 |
| 168 h | 1/1/1 | 1/1/0 | 0/0/0 | 4**/1/2 | 3/0/0 | 2/0/0 | 0/0/0 |

### Skala 1:

| | |
|---|---|
| 6 | Weiß angelaufen mit tiefen Rissen |
| 5 | Weiß angelaufen mit kleinen Rissen |
| 4 | 100% weiß angelaufen |
| 3 | 100% schwach weiß angelaufen |
| 2 | Teilweiße weiß angelaufen (50-90%) |
| 1 | Teilweiße weiß angelaufen (0-50%) |
| 0 | Nicht weiß angelaufen |

| | |
|---|---|
| *** Schwamm klebt stark an Oberfläche ** Schwamm klebt an Oberfläche * Schwamm klebt leicht an Oberfläche | |

### Bewertete Stellen: Oberfläche Schwamm/Oberfläche Platte/Oberfläche Becher

Die Härtungsgeschwindigkeit wurde anhand der Messung der Shore Härte D der aushärtenden Beschichtung bei 2 mm Schichtdicke verfolgt.

| t | Beispiel 4 | Beispiel 5 | Beispiel 6 | Beispiel 7 | Beispiel8 |
|---|---|---|---|---|---|
| 24 h | -* | -* | -* | 58 | 47 |
| 48 h | 26 | 55 | 66 | 66 | 61 |
| 72 h | 60 | 66 | 68 | 70 | 62 |
| 168 h | 72 | 73 | 74 | 75 | 68 |

| | | | | | |
|---|---|---|---|---|---|
| * Messung noch nicht möglich, da noch unzureichend ausgehärtet. | | | | | |

Es zeigte sich, dass die Proben der Formulierungen, welche unter Verwendung des 1,3-Oxathiolan-2-thions hergestellt wurden, deutlich glänzender und vor allem auch bei Frühwasserbelastung resistenter gegen ein Weißanlaufen, welches durch eine Carbamatisierung ausgelöst wird, sind.

Diese Beispiele zeigen, dass durch Zusatz des 1,3-Oxathiolan-2-thions es möglich ist, benzylalkoholfreie Beschichtungen zu formulieren, die den bisherigen, insbesondere bei tiefen Temperaturen hinsichtlich Frühwasserbelastbarkeit und Härtungsgeschwindigkeit, überlegen sind. Aus der höheren Aushärtungsgeschwindigkeit ergibt sich die Möglichkeit, ein breiteres Spektrum an Aminen einzusetzen, beispielsweise solche, die billiger sind, aber für die bisherigen Systeme zu langsam waren in der Härtungsreaktion. Weiterhin ist ein Verzicht auf Benzylalkohol möglich, der es erlaubt VOC-freie Beschichtungen, die auch bei tiefen Temperaturen aushärten ohne weiß anzulaufen, herzustellen.
Es wurde festgestellt, dass die Härtungsgeschwindigkeit bei gleicher Zusammensetzung der Komponente B in allen Versuchsreihen mit dem zunehmenden Anteil an dem 1,3-Oxathiolan-2-thion steigt.

In den zuvor beschriebenen Anwendungsbeispielen wurden folgende Komponenten verwendet:

| **Name** | **Funktion** | **Hersteller** |
|---|---|---|
| EPIKOTE^{™} Resin 828LVEL | Epoxidharz A | Momentive Specialty Chemicals |
| EPIKOTE ^{™} Resin 862 | Epoxidharz F | Momentive Specialty Chemicals |
| Bentone^{®} SD2 | Verdickungsmittel | Elementis Specialties |
| Dorsilit^{®} 10000 Mipur | Füllstoff Quarzmehl | Dorfner |
| Sikron^{®} M 500 | Füllstoff Quarzmehl | Quarzwerke GmbH |
| HELOXY ^{™} Modifier Z8 | Epoxide No 8: Epoxid-Reaktivverdünner | Momentive Specialty Chemicals |
| BYK^{®}-A 525 | Entlüftungsmittel | Byk Chemie |
| Bayferrox^{®} 130 BM | Rotpigment | Lanxess |
| RUETASOLV^{®} DI | Weichmacher | RKS GmbH |
| Vestamin^{®} IPD | aliphatisches Amin | Evonik Degussa |
| m-Xylylendiamin | Amin | Mitsubishi Gas Chemical |
| Novares LS 500 | Flüssiges Kohlenwasserstoffharz | Rütgers Germany GmbH |
| Bisphenol-A-Oxathiolanthion (BPA-DTC) | Modifiziertes Harz | Eigene Herstellung |

## Patentansprüche

1. Verwendung von
(1) mindestens einer Verbindung der allgemeinen Formel (I) 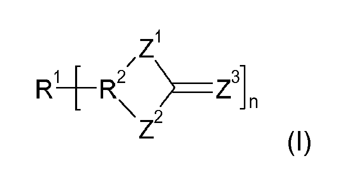 in welcher
- Z¹, Z² und Z³, jeweils unabhängig voneinander, für Sauerstoff oder Schwefel mit der Maßgabe stehen, dass zumindest ein Rest von Z¹, Z² und Z3 für Schwefel steht;
- R¹ für Wasserstoff, einen aliphatischen oder heteroaliphatischen Rest, einen araliphatischen oder heteroaliphatischen Rest, einen cycloaliphatischen oder heterocyclischen aliphatischen Rest, einen aromatischen oder heteroaromatischen Rest steht;
- R² für einen gegebenenfalls substituierten Rest CₓH₂ₓ₋₁ mit x gleich 1 bis 5 steht; und
- n für eine ganzzahlige Zahl von 1 bis 5 steht;
in einer härtbaren Epoxidharzformulierung, umfassend
(2) mindestens ein Epoxidharz und
(3) mindestens einen Aminhärter,
zur Oberflächenverbesserung der gehärteten Epoxidharzformulierung, **dadurch gekennzeichnet, dass** der mindestens eine Aminhärter keine Mannichbase umfasst, die erhalten wird durch ein Formaldehyd-Kondensat zwischen einem Phenol und einem aliphatischen Mono- oder Polyamin.

2. Verwendung nach Anspruch 1, **dadurch gekennzeichnet, dass** in der Verbindung der allgemeinen Formel (I) die Reste Z¹, Z² und Z³ eine der folgenden Bedeutungen aufweisen:
| Verbindung | Z¹ | Z² | Z³ |
|---|---|---|---|
| (Ia) | O | O | S |
| (Ib) | O | S | S |
| (Ic) | O | S | O |

3. Verwendung nach Anspruch 1 oder 2, **dadurch gekennzeichnet, dass** die Verbindung der allgemeinen Formel (I) der allgemeinen Formel (II) entspricht 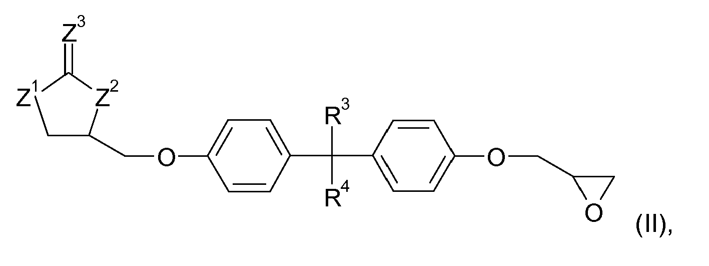 in welcher
- die Reste Z¹, Z² und Z³ die vorstehenden Bedeutungen aufweisen; und
- die Reste R³ und R⁴, jeweils unabhängig voneinander, für Wasserstoff, C₁-C₄-Alkyl, Trifluormethyl oder Aryl stehen.

4. Verwendung nach Anspruch 1 oder 2, **dadurch gekennzeichnet, dass** die Verbindung der allgemeinen Formel (I) der allgemeinen Formel (III) entspricht 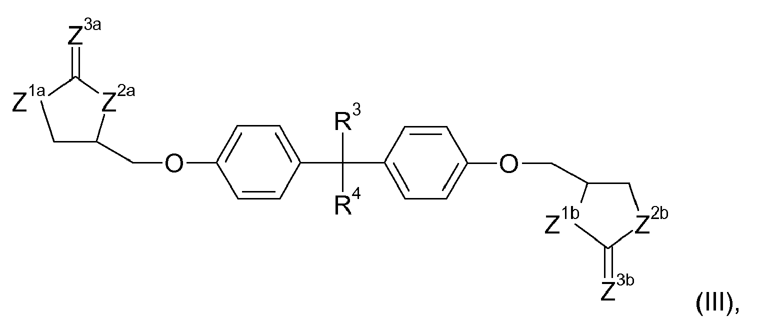 in welcher
- Z^{1a}, Z^{2a}, Z^{3a}, Z^{1b}, Z^{2b} und Z^{3b} jeweils unabhängig voneinander für Schwefel oder Sauerstoff mit der Maßgabe stehen, dass zumindest ein Rest von Z^{1a}, Z^{2a} und Z^{3a} für Schwefel und zumindest ein Rest von Z^{1b}, Z^{2b} und Z^{3b} für Schwefel steht; und
- R³ und R⁴, jeweils unabhängig voneinander, für Wasserstoff, C₁-C₄-Alkyl, Trifluormethyl oder Aryl stehen.

5. Verwendung nach einem der Ansprüche 1 bis 4, **dadurch gekennzeichnet, dass** das Epoxidharz auf einer Epoxidverbindung der allgemeinen Formel (VII) basiert: 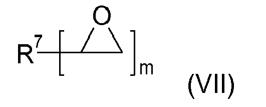 in welcher
m für eine ganzzahlige Zahl größer gleich 2, besonders bevorzugt für 2, steht; und
R⁷ für einen m-wertigen organischen Rest steht, der m Epoxidgruppen der Verbindung der allgemeinen Formel (VII) miteinander verbindet.

6. Verwendung nach einem der Ansprüche 1 bis 5, **dadurch gekennzeichnet, dass** die Epoxidharzformulierung keinen Benzylalkohol umfasst.

7. Verwendung nach einem der Ansprüche 1 bis 6, **dadurch gekennzeichnet, dass** die Verbindung der allgemeinen Formel (I) durch Umsetzung von
(a) mindestens einer Epoxidverbindung mit
(b) Schwefelkohlenstoff, Kohlenoxidsulfid oder einer Mischung davon in Gegenwart eines Salzes erhalten wird.

8. Verwendung nach Anspruch 7, **dadurch gekennzeichnet, dass** die Epoxidverbindung ausgewählt wird aus der Gruppe, bestehend aus Bisphenol A-diglycidylether (BADGE), Bisphenol F-diglycidylether (BFDGE), Polypropylenglykoldiglycidylether, Polytetrahydrofurandiglycidylether, linearen und verzweigten C₁-C₁₈-Alkylglycidylether (beispielsweise C₁₂/C₁₄-Alkylglycidylether, C₁₃/C₁₅-Alkylglycidylether, 2-Ethylhexylglycidylether), para-tert.-Butylphenolmonoglycidylether, o-Cresylglycidylether, Glycidylether des Cashewnusschalenöls, Diglycidylether von Dialkoholen wie beispielsweise 1,4-Butandiol, 1,6-Hexandiol, Neopentylglykol, Cyclohexandimethanol; Glycerintriglycidylether, Trimethylolpropanetriglycidylether, Polyglycerol-3-glycidylether, Polyoxypropylenglykoltriglycidylether, Rizinusöltriglycidylether, Pentaerythrityltetraglycidylether, Rizinusölpolyglycidylether, Glycidylester von C₁-C₁₈-Carbonsäuren, Addukten von Bisphenol A und Epichlorhydrin und Polyglycidylether von Phenol-Formaldehyd-Novolaken.

9. Verwendung nach Anspruch 8, **dadurch gekennzeichnet, dass** die Epoxidverbindung Bisphenol-A-diglycidylether (BADGE) ist.

10. Verwendung nach einem der Ansprüche 1 bis 9, **dadurch gekennzeichnet, dass** der Gehalt an Verbindung der allgemeinen Formel (I) in der härtbaren Epoxidharzformulierung, bezogen auf das zu härtende Epoxidharz, 1 bis 50 Gew.-% beträgt.

11. Verwendung nach einem der Ansprüche 1 bis 10 zur Herstellung von lösemittelarmen oder lösemittelfreien Beschichtungen, insbesondere Bodenbeschichtungen für Wohnbereiche, Aufenthaltsräume, öffentliche Gebäude, Industriebauten, Fabrik- und Lagerhallen, Geh- und Verbindungswege, Industrieanlagen, Werkstätten, Reinräume, Parkhäuser, -garagen sowie - decks und Brücken, Beschichtungen für Tankanlagen, Auffangwannen, Kühltürme, Rohre, zur Abdichtung von Dächern, Kellern, Behältern, wie für Trinkwasser, Schwimmbäder und Kläranlagen, Beschichtungen zum Korrosions-, Flamm- und Säureschutz metallischer und anderer Oberflächen und Untergründe; Klebstoffen, Dichtstoffen, Laminier-, Tränk- und Gießharze, Verguss- und Spachtelmassen, Verbundwerkstoffe, Faserverbundstoffe und Modellwerkstoffe.

12. Verfahren zur Herstellung von gehärteten Epoxidharzformulierungen mit verbesserter Oberfläche durch Härten eines Epoxidharzes mit mindestens einem Aminhärter, **dadurch gekennzeichnet, dass** die Härtung in Gegenwart von mindestens einer Verbindung der allgemeinen Formel (I) gemäß der Definition in einem der Ansprüche 1 bis 4 durchgeführt wird.

13. Verfahren nach Anspruch 12, **dadurch gekennzeichnet, dass** in dem Verfahren ein Epoxidharz mit den Merkmalen gemäß Anspruch 5 verwendet wird.

14. Verfahren nach Anspruch 12 oder 13, **dadurch gekennzeichnet, dass** in dem Verfahren ein Aminhärter verwendet wird.

15. Gehärtetes Epoxidharz, erhältlich nach einem Verfahren gemäß einem der Ansprüche 12 bis 14.
